# EUROPEAN PATENT APPLICATION

(11) **EP 4 382 965 A1**
(43) Date of publication of application: **12.06.2024**
(21) Application number: 21944424.7
(22) Date of filing: 30.09.2021
(51) Int. Cl.: G01S 13/90, G01S 7/02, G01S 7/40

(54) **DIHEDRAL CORNER REFLECTOR AND METHOD OF USE THEREOF**

(30) Priority: 02.08.2021 CN 202110882464
(71) Applicant: China Centre for Resources Satellite Data and Application, Beijing 100094 (CN)
(72) Inventor: WANG, Aichun, Beijing 100094 (CN); XIN, Yu, Beijing 100094 (CN); WANG, Yu, Beijing 100094 (CN); HONG, Xiaoyu, Beijing 100094 (CN); PAN, Zhiqiang, Beijing 100094 (CN); SHAO, Jun, Beijing 100094 (CN); LI, Xiaojin, Beijing 100094 (CN); CUI, Lin, Beijing 100094 (CN); ZENG, Jian, Beijing 100094 (CN); ZHAO, Hang, Beijing 100094 (CN); LI, Liang, Beijing 100094 (CN); MING, Feng, Beijing 100094 (CN)
(74) Representative: Prinz & Partner mbB
(86) International application number: PCT/CN2021/122007
(87) International publication number: WO 2023/010677

(57) **Abstract**

The invention provides a dihedral corner reflector and a use method thereof. A main reflector in the dihedral corner reflector comprises a transmitting signal reflecting surface composed of two rectangular metal surfaces perpendicular to each other, and the middle point of the common edge of the reflecting surface is the phase center H of the dihedral corner reflector; a support is used for supporting the main reflector and a pitching mechanism, and the pitching mechanism is used for adjusting the pitching direction of the main reflector; a horizontal mechanism is used for adjusting the horizontal direction of the main reflector; an orientation and phase center reference mechanism is located at the lowest part of the dihedral corner reflector, is used for implementing orientation pointing adjustment and is provided with an orientation rotating shaft for the rotation of the whole dihedral corner reflector. One point on the axis of the orientation rotating shaft serves as a phase center measurement reference O, the phase center measurement reference O serves as an original point of a local rectangular coordinate system of the dihedral corner reflector, and the three-dimensional geodetic coordinates of the phase center H are determined through the geometrical relationship between the phase center measurement reference O and the phase center H.

## Description

The present application claims priority to Chinese Patent Application No. 202110882464.X, titled "DIHEDRAL CORNER REFLECTOR AND USE METHOD THEREOF", filed on August 2, 2021 with the China National Intellectual Property Administration, which is incorporated herein by reference in its entirety.

### FIELD

The present disclosure relates to the technical field of radar detection, and in particular to a SAR dihedral corner reflector with high pointing accuracy and accurate phase center and a method of using the dihedral corner reflector.

### BACKGROUND

SAR dihedral corner reflector is a common passive calibrator. In the SAR dihedral corner reflector, a main reflector is formed by two mutually perpendicular rectangular planes. By rotating a polarization angle of the dihedral corner, a co-polarized point target of the conventional trihedral corner reflector may be simulated, and a cross-polarized point target may be simulated, providing a standard radar cross section (RCS) and a standard polarimetric scattering matrix for image quality evaluation of airborne/satellite-borne polarimetric synthetic aperture radar (SAR) and polarimetric interferometric SAR, and geometric, radiometric , polarimetric and polarimetric interferometric calibration. Compared with SAR antenna, the half-power beam width of the dihedral corner reflector is narrow in both the intensity pattern and the polarimetric isolation pattern. In order to meet standard SAR calibration accuracy requirements, there are strict requirements on the pointing alignment of the dihedral corner reflector. That is, the pointing of the dihedral corner reflector is aligned with the pointing of the SAR antenna, so as to obtain the nominal radar cross section (RCS) area or polarimetric scattering matrix of the dihedral corner reflector. For the polarimetric SAR and the polarimetric interferometric SAR, it is required that the phase center position of the dihedral corner reflector is known, so that a accurate three-dimensional position of the polarimetric SAR or the polarimetric interferometric SAR may be obtained by performing geodetic survey. For a satellite-borne SAR calibration application, it is often required that the dihedral corner reflector meets the requirements of the bidirectional coverage of SAR satellites ascending orbit and descending orbits, that is, an ability of adjusting an azimuth at a large angle is required.

The conventional SAR dihedral corner reflector has the following problems.
(1) Most of the pointing adjustment capabilities cannot meet high pointing accuracy alignment requirements, the adjustment process is complex, and the pointing error is large, resulting in errors of RCS and polarization scattering matrix.
(2) The ability to adjust the azimuth angle in a wide range cannot be achieved. Manually moving and adjusting the reflector cannot meet the requirements of the bidirectional coverage of the satellite-borne polarimetric SAR ascending orbit and descending orbits, resulting in a change in the position of the phase center.
(3) Without the phase center measurement reference. The phase center changes while adjusting the pointing, and then the unknown or inaccurate position of the reflector's phase center meet the requirements of geometric calibration and polarimetric interferometric calibration.

### SUMMARY

With the present disclosure, the technical problems of how to determine the high pointing accuracy and the phase center reference of the dihedral corner reflector are solved.

The following technical solutions are provided according to the present disclosure.

In a first aspect, a dihedral corner reflector is provided. The dihedral corner reflector includes a main reflector, a bracket, a pitching mechanism, a horizontal mechanism, and an azimuth and phase center reference mechanism. The main reflector includes a radar signal reflecting surface formed by two mutually perpendicular rectangular metal planes. A middle point of a common edge of the two mutually perpendicular rectangular metal planes is determined as a phase center H of the dihedral corner reflector. The bracket includes a horizontal bracket and a vertical bracket. A front end of the horizontal bracket is fixedly connected with the common edge of the two rectangular metal planes on a back of the main reflector. Preferably, the front end of the horizontal bracket is fixedly connected with the main reflector at the phase center H. A rear end of the horizontal bracket is connected with a frame body of the vertical bracket through the pitching mechanism. An upper end of the vertical bracket is connected with the horizontal bracket in a pitch-rotating manner. A lower end of the vertical bracket is fixedly connected with the horizontal mechanism. The horizontal mechanism is installed on the azimuth and phase center reference mechanism. An axis line of the vertical bracket is collinear with an azimuth rotation axis provided by the azimuth and phase center reference mechanism. An upper end of the pitching mechanism is connected with the rear end of the horizontal bracket in the pitch-rotating manner and a lower end of the pitching mechanism is connected with the vertical bracket in the pitch-rotating manner for adjusting a pitch pointing of the main reflector. Each of azimuth heights of the horizontal mechanism is adjustable and the horizontal mechanism is connected with the vertical bracket and the azimuth and phase center reference mechanism for adjusting a horizontal pointing of the main reflector. The azimuth and phase center reference mechanism is arranged at a bottom of the dihedral corner reflector for adjusting an azimuth pointing. The azimuth and phase center reference mechanism is configured to provide the azimuth rotation axis for rotating the dihedral corner reflector. A point on an axis line of the azimuth rotation axis is determined as a phase center measurement reference O. The phase center measurement reference O is determined as an origin of a local rectangular coordinate system of the dihedral corner reflector for determining three-dimensional geodetic coordinates of the phase center H based on a geometric relationship between the phase center measurement reference O and the phase center H.

In an embodiment, a reinforcing plate is arranged between each of upper edges and lower edges of two mutually perpendicular rectangular metal planes of the main reflector. The reinforcing plate is a slender non-metallic plate.

In an embodiment, the horizontal bracket of the bracket has a metal structure, and the vertical bracket of the bracket has a non-metal structure.

In an embodiment, the pitching mechanism includes a lead screw sleeve structure and a pitching shaft assembly. The pitching shaft assembly includes a first pitching shaft assembly, a second pitching shaft assembly and a third pitching shaft assembly. An upper end of the lead screw sleeve structure is rotatably connected with the rear end of the horizontal bracket through the first pitching shaft assembly. A lower end of the lead screw sleeve structure is rotatably connected with the frame body of the vertical bracket through the second pitching shaft assembly. The horizontal bracket is rotatably connected with the upper end of the vertical bracket through the third pitching shaft assembly. The lead screw sleeve structure is configured to expand and contract to drive the first pitching shaft assembly, the second pitching shaft assembly and the third pitching shaft assembly to move cooperatively.

In an embodiment, the first pitching shaft assembly includes a first adapter and a first rotating shaft. The first adapter is mounted at the rear end of the horizontal bracket for connecting the horizontal bracket and the first rotating shaft. The first rotating shaft, as a pitching shaft, is sleeved on the upper end of the lead screw sleeve structure that has been docked with the first adapter.

In an embodiment, the second pitching shaft assembly includes a second adapter and a second rotating shaft. The second adapter is mounted on the vertical bracket for connecting the vertical bracket and the second rotating shaft. The second rotating shaft, as a pitching shaft, is sleeved on the lower end of the lead screw sleeve structure that has been docked with the second adapter.

In an embodiment, the third pitching shaft assembly includes a third adapter and a third rotating shaft. The third adapter is fixed on the upper end of the vertical bracket for connecting the vertical bracket and the third rotating shaft. The third rotating shaft, as a pitching shaft, is sleeved on the horizontal bracket that has been docked with the third adapter.

In an embodiment, the horizontal mechanism includes an upper plate and a lower plate which are regular polygon plates or circular plates. The upper plate is defined with multiple longitudinal through holes. Nuts are arranged on both ends of each of the longitudinal through holes. Screws pass through the longitudinal through holes on the upper plate and are fixed to the lower plate. Lengths of the screws at different positions between the upper plate and the lower plate are adjusted by the mate of the screws and the nuts on both ends of the longitudinal through holes to adjust a horizontal pointing of the dihedral corner reflector.

In an embodiment, the upper plate and the lower plate in the horizontal mechanism are non-metal regular polygon plates. The upper plate and the lower plate are arranged to have an angle on a horizontal projection plane.

In an embodiment, the azimuth and phase center reference mechanism includes an azimuth turntable, a base and an azimuth locking mechanism. The base is arranged below the azimuth turntable and is fixedly connected to a ground. An annular male stop is defined on an upper end of the base. An annular female stop is defined on a lower end of the azimuth turntable to be docked with the annular male stop. The azimuth turntable rotates around a central axis of the two annular stops with the central axis of the two annular stops as the azimuth rotation axis. The azimuth locking mechanism includes a threaded rod. A threaded hole perpendicular to the azimuth rotation axis is defined on a side wall of the annular female stop of the azimuth turntable. The threaded rod is screwed into the threaded hole to contact the annular male stop. The threaded rod is configured to press against the annular male stop of the base to prevent the azimuth turntable to rotate to lock the azimuth pointing.

In an embodiment, the base includes a ground fixing plate and an annular structure component with the male stop. The azimuth turntable is an annular structure component with the female stop, and is configured to engage with the annular structure component with the male stop.

In an embodiment, a structure block with a through hole or a protrusion in a center of the structure block is arranged in the annular structure component with the male stop or the annular structure component with the female stop. The structure block is connected to an inner wall of the annular structure component through a strut. The through hole or the protrusion on the structure block is located on the central axis and is determined as the phase center measurement reference O.

In an embodiment, multiple threaded holes are evenly defined on an upper end surface of the azimuth turntable. The threaded holes are mated with threaded connection components of a lower plate of the horizontal mechanism to fixedly connect the horizontal mechanism with the azimuth and phase center reference mechanism.

In a second aspect, a method of using a dihedral corner reflector is provided. The method including: step (1), installing an azimuth and phase center reference mechanism, and determining three-dimensional geodetic coordinates of a phase center measurement reference O by performing measurement; step (2), installing a horizontal mechanism, a bracket, a pitching mechanism and a main reflector of the dihedral corner reflector; step (3), after installing the dihedral corner reflector, adjusting the horizontal mechanism to perform horizontal adjustment, adjusting the azimuth and phase center reference mechanism based on an azimuth pointing angle required in a current calibration task where the main reflector rotates around an azimuth rotation axis where the phase center measurement reference O is located, and locking azimuth to perform azimuth pointing adjustment; step (4), adjusting a telescopic length of the pitching mechanism based on a pitch pointing angle required in the task to perform pitch pointing adjustment; and step (5), calculating three-dimensional geodetic coordinates of a phase center H of the dihedral corner reflector based on the azimuth, the pitch pointing, a geometric relationship between the phase center H and the phase center measurement reference O; or pre-determining a lookup table of three-dimensional geodetic coordinates corresponding to azimuth pointing angles, pitching pointing angles and phase centers H, and querying the lookup table to obtain three-dimensional geodetic coordinates of a phase center.

With the dihedral corner reflector and the method of using the dihedral corner reflector according to the present disclosure, the following beneficial effects can be achieved.
(1) With the simple passive mechanical structure according to the present disclosure, the pitch of the lead screw in the pitching mechanism and the pitch of the screw in the horizontal mechanism are adjusted to perform continuous adjustment on the three-dimensional pointing with an accuracy better than 0.1°, meeting the high-precision pointing requirements of image quality evaluation of airborne/satellite-borne polarimetric synthetic aperture radar (SAR) and polarimetric interferometric SAR, and geometric, radiometric , polarization and polarimetric interferometric calibration.
(2) With the dihedral corner reflector according to the present disclosure, the azimuth pointing can be adjusted in a range of 360° by using the azimuth turntable and the horizontal mechanism to meet the requirements of adjusting the satellite-borne SAR ascending orbit and descending orbit in a large range. Moreover, it is only required to adjust the horizontal pointing for a first time, that is, it is only required to adjust the horizontal pointing once for using, operating easily and saving time and effort.
(3) The dihedral corner reflector according to the present disclosure has a simple and lightweight structure without requiring a large floor space and a field power supply device. In addition, other dihedral corner reflectors without three-dimensional pointing adjustment and phase center reference can be modified to improve the function and performance of the other dihedral corner reflectors according to the conventional technology.
(4) Based on the structure of the dihedral corner reflector and the design of the phase center measurement reference O according to the present disclosure, a local cartesian coordinate system is established with the phase center measurement reference O as an origin, and a relative geometric relationship between the phase center H of the SAR dihedral corner reflector and the phase center measurement reference O is obtained. In adjusting the pitch pointing, the horizontal pointing and the azimuth pointing, the position of the phase center H of the SAR dihedral angle reflector relative to the phase center measurement reference O changes. The relative position change is determined based on the structure of the SAR dihedral angle reflector, and has a one-to-one correspondence relationship with a three-dimensional pointing angle of the dihedral corner reflector. The relative position change of the phase center H can be calculated based on the geometric relationship. Then, based on the three-dimensional geodetic coordinates of the phase center measurement reference O, an accurate geodetic coordinate system of the phase center H of the SAR dihedral corner reflector is obtained. That is, the phase center can be accurately calculated at any pointing.

### BRIEF DESCRIPTION OF THE DRAWINGS

Figure 1 shows a schematic structural diagram of a dihedral corner reflector according to the present disclosure;
Figure 2 shows a schematic structural diagram of an azimuth and phase center reference mechanism according to the present disclosure; and
Figure 3 shows an example of a geometric relationship between a phase center of a dihedral corner reflector and a phase center measurement reference according to the present disclosure.

Reference numerals are listed as follows:
- 1: main reflector
- 2: bracket
- 3: pitching mechanism
- 31: lead screw sleeve structure
- 32: first pitching shaft assembly
- 33: second pitching shaft assembly
- 34: third pitching shaft assembly
- 4: horizontal mechanism
- 5: azimuth and phase center reference mechanism
- 51: azimuth turntable
- 52: base
- 53: azimuth locking mechanism

### DETAILED DESCRIPTION

Hereinafter, the present disclosure is described in detail. The features and advantages of the present disclosure become clear and apparent from these descriptions.

The word "exemplary" in the descriptions means as an example, as an embodiment, or illustratively". Any "exemplary" embodiment described herein is not an embodiment preferred or better than other embodiments. Although various aspects of the embodiments are shown in the drawings, it is not necessary to draw the drawings to scale unless otherwise indicated.

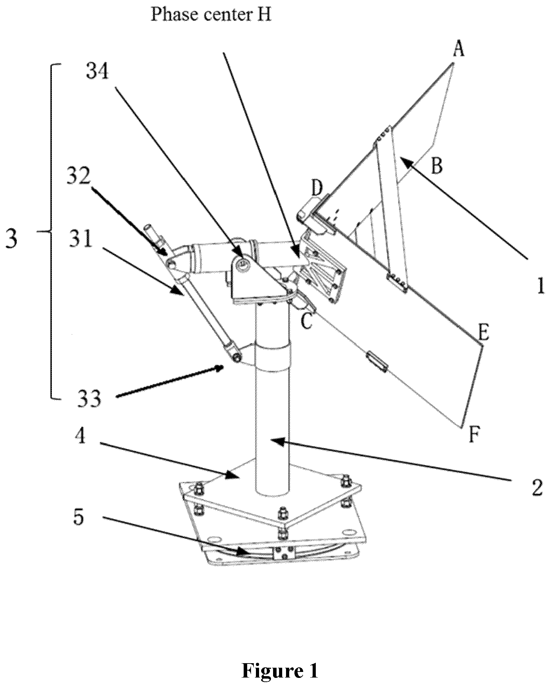

According to a first aspect of the present disclosure, a dihedral corner reflector is provided. As shown in Figure 1, the dihedral corner reflector includes a main reflector 1, a bracket 2, a pitching mechanism 3, a horizontal mechanism 4, and an azimuth and phase center reference mechanism 5.

The main reflector 1 includes a transmission signal reflecting surface formed by two mutually perpendicular rectangular metal planes. A middle point of a common edge of the two mutually perpendicular rectangular metal planes is determined as a phase center H of the dihedral corner reflector.

The bracket 2 includes a horizontal bracket and a vertical bracket. A front end of the horizontal bracket is fixedly connected with the common edge of the two rectangular metal planes on a back of the main reflector 1. Preferably, the front end of the horizontal bracket is fixedly connected with the main reflector 1 at the phase center H. A rear end of the horizontal bracket is connected with a frame body of the vertical bracket through the pitching mechanism 3. An upper end of the vertical bracket is connected with the horizontal bracket in a pitch-rotating manner. A lower end of the vertical bracket is fixedly connected with the horizontal mechanism 4. The horizontal mechanism 4 is installed on the azimuth and phase center reference mechanism 5. An axis line of the vertical bracket is collinear with an azimuth rotation axis provided by the azimuth and phase center reference mechanism 5.

An upper end of the pitching mechanism 3 is connected with the rear end of the horizontal bracket in the pitch-rotating manner and a lower end of the pitching mechanism is connected with the vertical bracket in the pitch-rotating manner for adjusting a pitch pointing of the main reflector 1.

Each of azimuth heights of the horizontal mechanism 4 is adjustable and the horizontal mechanism is connected with the vertical bracket and the azimuth and phase center reference mechanism 5 for adjusting a horizontal pointing of the main reflector 1.

The azimuth and phase center reference mechanism 5 is arranged at a bottom of the dihedral corner reflector for adjusting an azimuth pointing. The azimuth and phase center reference mechanism is configured to provide the azimuth rotation axis for rotating the dihedral corner reflector. A point on an axis line of the azimuth rotation axis is determined as a phase center measurement reference O. The phase center measurement reference O is determined as an origin of a local rectangular coordinate system of the dihedral corner reflector for determining three-dimensional geodetic coordinates of the phase center H based on a geometric relationship between the phase center measurement reference O and the phase center H.

As shown in Figure 1, the main reflector 1 includes a transmitting signal reflecting surface formed by two mutually perpendicular rectangular metal planes ABCD and CDEF, providing a standard phase center position, a radar cross section (RCS) area and a target image of a standard point with a known scattering matrix in a SAR image, that is, providing standard reference point targets required for image quality evaluation of airborne/satellite-borne polarimetric synthetic aperture radar (SAR) and polarimetric interferometric SAR, and geometric, radiometric, polarization and polarimetric interferometric calibration. The relationship (that is, the polarization angle) between the common edge CD of the two mutually perpendicular rectangular metal planes and a direction of an electric field of an electromagnetic wave emitted by the SAR satellite determines the type of the dihedral corner reflector. Figure 1 shows a dihedral corner reflector with a 45° polarization angle. A dihedral corner reflector with a 0° polarization angle, a dihedral corner reflector with a 22.5° polarization angle and other commonly used dihedral corner reflectors may be obtained by changing the pointing of the common edge CD.

In an embodiment, a reinforcing plate is arranged between each of upper edges and lower edges of two mutually perpendicular rectangular metal planes of the main reflector 1. The reinforcing plate is a slender non-metallic plate, and is arranged for ensuring that the rectangular metal planes ABCD and CDEF are perpendicular to each other.

As shown in Figure 1, the bracket 2 is configured to carry the main reflector 1 and the pitching mechanism 3. The bracket 2 provides mechanical connection interfaces for connecting with the main reflector 1, the pitching mechanism 3, the horizontal mechanism 4, the azimuth and the phase center reference mechanism 5. The horizontal bracket of the bracket 2 has a metal structure. A front end of the horizontal bracket is fixedly connected with the common edge of the two rectangular metal planes on the back of the main reflector 1. Preferably, the front end of the horizontal bracket is fixedly connected with the main reflector 1 at the phase center H. A rear end of the horizontal bracket is connected with a frame body of the vertical bracket through the pitching mechanism 3. The vertical bracket has a non-metallic structure to avoid an RCS error and a standard scattering matrix error caused by the scattering of the vertical bracket. An upper end of the vertical bracket is rotatably connected with the horizontal bracket, and a lower end of the vertical bracket is fixed on the horizontal mechanism 4. An axis line of the vertical bracket is collinear with an azimuth rotation axis provided by the azimuth and phase center reference mechanism 5.

Each of the horizontal bracket and the vertical bracket in the bracket 2 has a cylindrical structure, and apparently may have another structure such as a prism structure, which is not limited herein.

As shown in Figure 1, the pitching mechanism 3 includes a lead screw sleeve structure 31 and a pitching shaft assembly. The pitching shaft assembly includes a first pitching shaft assembly 32, a second pitching shaft assembly 33 and a third pitching shaft assembly 34. An upper end of the lead screw sleeve structure 31 is rotatably connected with the rear end of the horizontal support through the first pitching shaft assembly 32. A lower end of the lead screw sleeve structure 31 is rotatably connected with the frame body of the vertical bracket through the second pitching shaft assembly 33. The horizontal bracket is rotatably connected with the upper end of the vertical bracket through the third pitching shaft assembly 34. The lead screw sleeve structure expands and contracts to drive the first pitching shaft assembly, the second pitching shaft assembly and the third pitching shaft assembly to move cooperatively, performing pitch pointing adjustment on the main reflector 1. Using the lead screw sleeve structure, an adjustment step of the pitch pointing adjustment may be more accurate than 0.1° with a change of the lead screw.

The first pitching shaft assembly 32 includes a first adapter and a first rotating shaft. The first adapter is mounted at the rear end of the horizontal bracket for connecting the horizontal bracket and the first rotating shaft. The first rotating shaft, as a pitching shaft, is sleeved on the upper end of the lead screw sleeve structure that has been docked with the first adapter. In an embodiment, the first adapter may be, but not limited to, a lug. The first rotating shaft may be, but not limited to, a screw, and may be another rod-shaped structure component.

The second pitching shaft assembly 33 includes a second adapter and a second rotating shaft. The second adapter is mounted on the vertical bracket for connecting the vertical bracket and the second rotating shaft. The second rotating shaft, as a pitching shaft, is sleeved on the lower end of the lead screw sleeve structure that has been docked with the second adapter. The second adapter may be, but not limited to, a lug, a triangular plate or a semicircular plate. The second rotating shaft may be, but not limited to, a screw.

The third pitching shaft assembly 34 includes a third adapter and a third rotating shaft. The third adapter is fixed on the upper end of the vertical bracket for connecting the vertical bracket and the third rotating shaft. The third rotating shaft, as a pitching shaft, is sleeved on the horizontal bracket that has been docked with the third adapter. The third adapter may be, but not limited to, a groove support base. The third rotating shaft may be, but not limited to, a screw.

As shown in Figure 1, the horizontal mechanism 4 includes an upper plate and a lower plate which are regular polygon plates or circular plates. The upper plate is defined with multiple longitudinal through holes, such as four longitudinal through holes. Nuts are arranged on both ends of each of the longitudinal through holes. Screws pass through the longitudinal through holes on the upper plate and are fixed to the lower plate. Lengths of the screws at different positions between the upper plate and the lower plate are adjusted by the mate of the screws and the nuts on both ends of the longitudinal through holes, thereby performing horizontal pointing adjustment on the dihedral corner reflector. The accuracy of the horizontal pointing adjustment may be more accurate than 0.1°.

In an embodiment, the upper plate and the lower plate in the horizontal mechanism 4 are non-metal regular polygon plates. An angle, such as an angle ranging from 30° to 60°, is arranged between the upper plate and the lower plate on a horizontal projection plane for leaving space to screw the nut to quickly perform horizontal adjustment.

It is only required to perform the horizontal pointing adjustment once. That is, the horizontal mechanism is locked by the bolts and nuts, and it is unnecessary to adjust the horizontal pointing in subsequent configuration of other pointing.

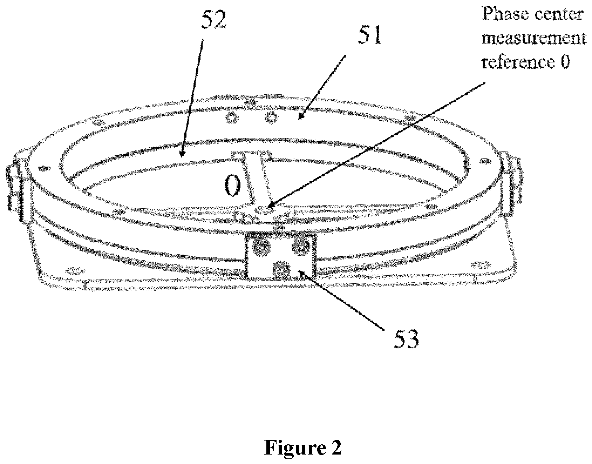

As shown in Figure 2, the azimuth and phase center reference mechanism 5 includes an azimuth turntable 51, a base 52 and an azimuth locking mechanism 53. The base 52 is arranged below the azimuth turntable 51, and is fixedly connected to the ground. An annular male stop is defined on an upper end of the base 52. An annular female stop is defined on a lower end of the azimuth turntable 51 to be docked with the annular male stop. The azimuth turntable 51 rotates around a central axis of the two annular stops with the central axis of the two annular stops as the azimuth rotation axis. The azimuth locking mechanism 53 includes a threaded rod, such as a screw or a bolt. A threaded hole perpendicular to the azimuth rotation axis is defined on a side wall of the annular female stop of the azimuth turntable 51. The threaded rod is screwed into the threaded hole to contact the annular male stop. The threaded rod presses against the annular male stop of the base 52 to prevent the azimuth turntable 51 to rotate, thereby locking the azimuth pointing. In an embodiment, the azimuth locking mechanism 53 further includes a gasket. The threaded rod is screwed into the threaded hole after passing through the gasket, improving the installation stability of the threaded rod and preventing the end of the threaded rod from abrading the mechanical structure.

In an embodiment, the base 52 includes a ground fixing plate and an annular structure component with the male stop. With the ground fixing plate, a large contact area with the ground is provided for firmly supporting the mechanism on the ground fixing plate. The azimuth turntable 51 is an annular structure component with the female stop and engages with the annular structure component with the male stop. A structure block with a through hole or a protrusion in a center of the structure block is arranged in the annular structure component with the male stop or the annular structure component with the female stop. The structure block is connected to an inner wall of the annular structure component through a strut. The through hole or the protrusion on the structure block is located on the central axis (the azimuth rotation axis), materializing the phase center measurement reference O.

In an embodiment, multiple threaded holes are evenly defined on an upper end surface of the azimuth turntable 51. The threaded holes are mated with threaded connection components, such as screws or bolts, of a lower plate of the horizontal mechanism 4 to fixedly connect the horizontal mechanism 4 with the azimuth and phase center reference mechanism 5.

In order to ensure the stability of the entire structure of the dihedral corner reflector and the reliable connection between the dihedral corner reflector and the ground, a concrete prefabricated part may be injected into the ground to enhance the stability of the surface structure. The prefabricated part is a concrete-fixed column structure. An upper end of the column structure is inserted into the base 52. The prefabricated part may have other structures, which are not repeated herein.

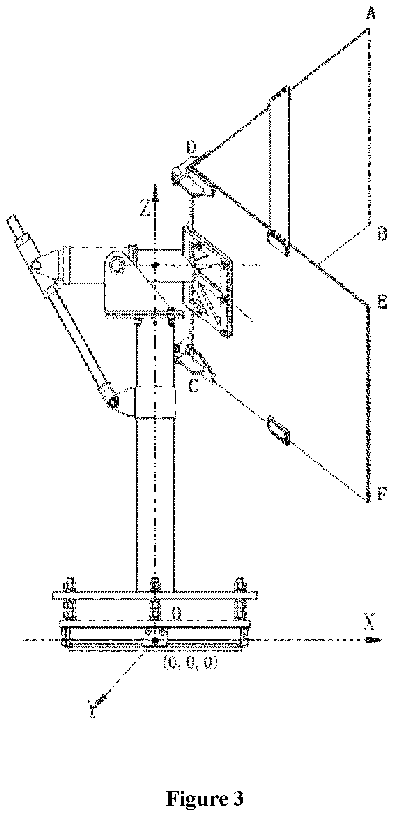

Referring to Figure 3, a geometric relationship between the phase center measurement reference O and the phase center H is illustrated in accordance with a SAR dihedral corner reflector with a right-angle side of 789mm. Taking the phase center measurement reference O as an origin, a local cartesian coordinate system is established. Then, a relative geometric relationship between the phase center H of the SAR dihedral corner reflector and the phase center measurement reference O may be obtained. It can be seen that in adjusting the pitch pointing, the horizontal pointing and the azimuth pointing, the position of the phase center H of the SAR dihedral angle reflector relative to the phase center measurement reference O changes. The relative position change is determined based on the structure of the SAR dihedral angle reflector, and has a one-to-one correspondence relationship with a three-dimensional pointing angle of the dihedral corner reflector. The relative position change of the phase center H may be calculated based on the geometric relationship. Then, based on the three-dimensional geodetic coordinates of the phase center measurement reference O, an accurate geodetic coordinate system of the phase center H of the SAR dihedral corner reflector is obtained. (For the SAR calibration, a World Geodetic System 1984, that is WGS84 coordinate, is generally used).

According a second aspect of the present disclosure, a method of using a dihedral corner reflector is provided. The method includes the following steps (1) to (5).

In step (1), an azimuth and phase center reference mechanism 5 is installed, and three-dimensional geodetic coordinates of a phase center measurement reference O is determined by performing measurement.

In step (2), a horizontal mechanism 4, a bracket 2, a pitching mechanism 3 and a main reflector 1 of the dihedral corner reflector are installed.

In step (3), after the dihedral corner reflector is installed, screws installed at multiple positions on the horizontal mechanism 4 and nuts on both sides of the upper plate are adjusted to perform horizontal adjustment. Then, an azimuth turntable in the azimuth and phase center reference mechanism 5 is adjusted based on an azimuth pointing angle required in a current calibration task, so that the main reflector 1 rotates around an azimuth rotation axis where the phase center measurement reference O is located. Azimuth is locked, thus azimuth pointing adjustment is performed.

In step (4), a telescopic length of the pitching mechanism 3, that is a lead screw sleeve structure in the pitching mechanism 3, is adjusted based on a pitch pointing angle required in the task to perform pitch pointing adjustment.

In step (5), three-dimensional geodetic coordinates of a phase center H of the dihedral corner reflector are calculated based on the azimuth, the pitch pointing, a geometric relationship between the phase center H and the phase center measurement reference O; or a lookup table of three-dimensional geodetic coordinates corresponding to azimuth pointing angles, pitching pointing angles and phase centers H may be pre-determined, and then accurate three-dimensional geodetic coordinates in a WGS84 format of a phase center are obtained by querying the lookup table.

The present disclosure has been described in detail above in conjunction with s specific embodiments and exemplary examples, and these descriptions should not be understood as limitation to the present disclosure. Those skilled in the art should understand that without deviating from the spirit and scope of the present disclosure, various equivalent substitutions, modifications or improvements can be made to the technical solutions of the present disclosure, and these substitutions, modifications or improvements fall within the scope of the present disclosure. The scope of protection of the present disclosure is subject to the attached claim.

The part which is not described in detail in the specification are common knowledge of those skilled in the art.

## Claims

1. A dihedral corner reflector, comprising a main reflector (1), a bracket (2), a pitching mechanism (3), a horizontal mechanism (4), and an azimuth and phase center reference mechanism (5), wherein
the main reflector (1) comprises a transmission signal reflecting surface formed by two mutually perpendicular rectangular metal planes, and a middle point of a common edge of the two mutually perpendicular rectangular metal planes is determined as a phase center H of the dihedral corner reflector;
the bracket (2) comprises a horizontal bracket and a vertical bracket, a front end of the horizontal bracket is fixedly connected with the common edge of the two rectangular metal planes on a back of the main reflector (1), a rear end of the horizontal bracket is connected with a frame body of the vertical bracket through the pitching mechanism (3), an upper end of the vertical bracket is connected with the horizontal bracket in a pitch-rotating manner, a lower end of the vertical bracket is fixedly connected with the horizontal mechanism (4), the horizontal mechanism (4) is installed on the azimuth and phase center reference mechanism (5), and an axis line of the vertical bracket is collinear with an azimuth rotation axis provided by the azimuth and phase center reference mechanism (5);
an upper end of the pitching mechanism (3) is connected with the rear end of the horizontal bracket in the pitch-rotating manner and a lower end of the pitching mechanism (3) is connected with the vertical bracket in the pitch-rotating manner for adjusting a pitch pointing of the main reflector (1);
each of azimuth heights of the horizontal mechanism (4) is adjustable and the horizontal mechanism (4) is connected with the vertical bracket and the azimuth and phase center reference mechanism (5) for adjusting a horizontal pointing of the main reflector (1); and
the azimuth and phase center reference mechanism (5) is arranged at a bottom of the dihedral corner reflector for adjusting an azimuth pointing, the azimuth and phase center reference mechanism (5) is configured to provide the azimuth rotation axis for rotating the dihedral corner reflector, a point on an axis line of the azimuth rotation axis is determined as a phase center measurement reference O, the phase center measurement reference O is determined as an origin of a local cartesian coordinate system of the dihedral corner reflector for determining three-dimensional geodetic coordinates of the phase center H based on a geometric relationship between the phase center measurement reference O and the phase center H.

2. The dihedral corner reflector according to claim 1, wherein a reinforcing plate is arranged between each of upper edges and lower edges of two mutually perpendicular rectangular metal planes of the main reflector (1), and the reinforcing plate is a slender non-metallic plate.

3. The dihedral corner reflector according to claim 1, wherein the horizontal bracket of the bracket (2) has a metal structure, and the vertical bracket of the bracket (2) has a non-metal structure.

4. The dihedral corner reflector according to claim 1, wherein the front end of the horizontal bracket is fixedly connected with the main reflector (1) at the phase center H.

5. The dihedral corner reflector according to claim 1, wherein the pitching mechanism (3) comprises a lead screw sleeve structure (31) and a pitching shaft assembly, the pitching shaft assembly comprises a first pitching shaft assembly (32), a second pitching shaft assembly (33) and a third pitching shaft assembly (34), an upper end of the lead screw sleeve structure (31) is rotatably connected with the rear end of the horizontal bracket through the first pitching shaft assembly (32), a lower end of the lead screw sleeve structure (31) is rotatably connected with the frame body of the vertical bracket through the second pitching shaft assembly (33), the horizontal bracket is rotatably connected with the upper end of the vertical bracket through the third pitching shaft assembly (34), and the lead screw sleeve structure is configured to expand and contract to drive the first pitching shaft assembly, the second pitching shaft assembly and the third pitching shaft assembly to move cooperatively.

6. The dihedral corner reflector according to claim 5, wherein the first pitching shaft assembly (32) comprises a first adapter and a first rotating shaft, the first adapter is mounted at the rear end of the horizontal bracket, and the first rotating shaft, as a pitching shaft, is sleeved on the upper end of the lead screw sleeve structure that has been docked with the first adapter.

7. The dihedral corner reflector according to claim 5, wherein the second pitching shaft assembly (33) comprises a second adapter and a second rotating shaft, the second adapter is mounted on the vertical bracket, and the second rotating shaft, as a pitching shaft, is sleeved on the lower end of the lead screw sleeve structure that has been docked with the second adapter.

8. The dihedral corner reflector according to claim 5, wherein the third pitching shaft assembly (34) comprises a third adapter and a third rotating shaft, and the third adapter is fixed on the upper end of the vertical bracket, and the third rotating shaft, as a pitching shaft, is sleeved on the horizontal bracket that has been docked with the third adapter.

9. The dihedral corner reflector according to claim 1, wherein the horizontal mechanism (4) comprises an upper plate and a lower plate which are regular polygon plates or circular plates, the upper plate is defined with a plurality of longitudinal through holes, nuts are arranged on both ends of each of the longitudinal through holes, screws pass through the longitudinal through holes on the upper plate and are fixed to the lower plate, and lengths of the screws at different positions between the upper plate and the lower plate are adjusted by mate of the screws and the nuts on both ends of the longitudinal through holes to adjust a horizontal pointing of the dihedral corner reflector.

10. The dihedral corner reflector according to claim 9, wherein the upper plate and the lower plate in the horizontal mechanism (4) are non-metal regular polygon plates, and an angle is arranged between the upper plate and the lower plate on a horizontal projection plane.

11. The dihedral corner reflector according to claim 1, wherein the azimuth and phase center reference mechanism (5) comprises an azimuth turntable (51), a base (52) and an azimuth locking mechanism (53), the base (52) is arranged below the azimuth turntable (51) and is fixedly connected to a ground, an annular male stop is defined on an upper end of the base (52), an annular female stop is defined on a lower end of the azimuth turntable (51) to be docked with the annular male stop, the azimuth turntable (51) rotates around a central axis of the two annular stops with the central axis of the two annular stops as the azimuth rotation axis, the azimuth locking mechanism (53) comprises a threaded rod, a threaded hole perpendicular to the azimuth rotation axis is defined on a side wall of the annular female stop of the azimuth turntable (51), the threaded rod is screwed into the threaded hole to contact the annular male stop, and the threaded rod is configured to press against the annular male stop of the base (52) to prevent the azimuth turntable (51) to rotate to lock the azimuth pointing.

12. The dihedral corner reflector according to claim 11, wherein the base (52) comprises a ground fixing plate and an annular structure component with the male stop, and the azimuth turntable (51) is an annular structure component with the female stop and is configured to engage with the annular structure component with the male stop.

13. The dihedral corner reflector according to claim 12, wherein a structure block with a through hole or a protrusion in a center of the structure block is arranged in the annular structure component with the male stop or the annular structure component with the female stop, the structure block is connected to an inner wall of the annular structure component through a strut, and the through hole or the protrusion on the structure block is located on the central axis and is determined as the phase center measurement reference O.

14. The dihedral corner reflector according to in claim 12, wherein a plurality of threaded holes are evenly defined on an upper end surface of the azimuth turntable (51), and the threaded holes are mated with threaded connection components of a lower plate of the horizontal mechanism (4) to fixedly connect the horizontal mechanism (4) with the azimuth and phase center reference mechanism (5).

15. A method of using a dihedral corner reflector, comprising:
step (1), installing an azimuth and phase center reference mechanism (5), and determining three-dimensional geodetic coordinates of a phase center measurement reference O by performing measurement;
step (2), installing a horizontal mechanism (4), a bracket(2), a pitching mechanism (3) and a main reflector (1) of the dihedral corner reflector;
step (3), after installing the dihedral corner reflector, adjusting the horizontal mechanism (4) to perform horizontal adjustment, adjusting the azimuth and phase center reference mechanism (5) based on an azimuth pointing angle required in a current calibration task wherein the main reflector (1) rotates around an azimuth rotation axis where the phase center measurement reference O is located, and locking azimuth to perform azimuth pointing adjustment;
step (4), adjusting a telescopic length of the pitching mechanism (3) based on a pitch pointing angle required in the task to perform pitch pointing adjustment; and
step (5), calculating three-dimensional geodetic coordinates of a phase center H of the dihedral corner reflector based on the azimuth, the pitch pointing, a geometric relationship between the phase center H and the phase center measurement reference O; or pre-determining a lookup table of three-dimensional geodetic coordinates corresponding to azimuth pointing angles, pitching pointing angles and phase centers H, and querying the lookup table to obtain three-dimensional geodetic coordinates of a phase center.
